# EUROPEAN PATENT APPLICATION

(11) **EP 4 814 297 A1**
(43) Date of publication of application: **30.09.2026**
(21) Application number: 25178937.6
(22) Date of filing: 27.05.2025
(51) Int. Cl.: F03D 7/02

(54) **A METHOD AND SYSTEM FOR CONTROLLING YAWING OPERATION OF A WIND TURBINE GENERATOR (WTG) IN A WIND FARM**

(30) Priority: 28.03.2025 IN 202511030075
(71) Applicant: RE Technologies GmbH, 22083 Hamburg (DE)
(72) Inventor: SAKTHIVEL, MAHENDRAN, 560066 Bengaluru Karnataka (IN); CHAGANTI, KALYAN, 560066 Bengaluru Karnataka (IN)
(74) Representative: Buzzi, Notaro & Antonielli d'Oulx S.p.A.

(57) **Abstract**

The present invention provides a system and method for controlling yawing operation of a wind turbine generator (WTG) in a wind farm. In the present invention a controller (205) within the WTG, receives wind direction values from a first sensor (110) in the wind turbine generator. Thereafter, the controller (205) determines a first mean wind direction, over a predetermined time, of the wind direction values received from the first sensor (110). Also, the controller (205) receives wind direction values from a second sensor (301) mounted away from the wind turbine generator and determines a second mean wind direction value, over a predetermined time period, of the wind direction values received from the second sensor (301). Further, the controller (205) determines a first standard deviation, over a predetermined time, of the wind direction values received from the first sensor (110), and it also determines a second standard deviation, over a predetermined time period, of the wind direction values received from the second sensor (301). Thereafter, it determines a difference between the first and second mean wind directions and compares the determined difference with a predetermined threshold value, wherein if the determined difference is greater than the predetermined threshold value, it compares the first and second standard deviations and selects a source of wind direction that has a lower standard deviation amongst the first and second standard deviations for subsequent yawing operations.

## Description

### FIELD OF INVENTION:

The present invention relates to method and system for controlling frequent yawing operation of a wind turbine generator (WTG) in a wind farm, thereby decreasing the wear and tear on the yawing system of the WTG.

### BACKGROUND OF THE INVENTION:

The following background discussion includes information that may be useful in understanding the present invention. It is not an admission that any of the information provided herein is prior art or relevant to the presently claimed invention, or that any publication expressly or implicitly referenced is prior art.

During low wind speed conditions, the wind direction changes frequently and significantly, leading to frequent yawing operations which leads to unnecessary wear and tear. Also, the wake effect from other turbines adds to this frequent wind direction changes. The frequent yawing (in low wind speed conditions) is without any significant increase in the power due to the low wind speed.

The frequent yawing can be minimized without sacrificing on the power, thereby decreasing the wear and tear on the yawing system of the WTG.

### OBJECTIVES OF THE INVENTION:

The primary object of the present invention is to provide a method and system for controlling frequent yawing operation of a wind turbine generator (WTG).

Another object of the present invention is to provide a method and system for controlling frequent yawing operation of a wind turbine generator (WTG) in a wind farm during low wind speed conditions.

### SUMMARY OF THE INVENTION:

In an aspect, present invention provides a method for controlling yawing operation of a wind turbine generator (WTG) in a wind farm. The method comprises the steps of receiving wind direction values from a first sensor in the wind turbine generator and determining a first mean wind direction value, over a pre-determined time period, of the wind direction values received from the first sensor in the wind turbine generator. Further, receiving wind direction values from a second sensor mounted away from the wind turbine generator and determining a second mean wind direction value, over a pre-determined time period, of the wind direction values received from the second sensor mounted away from the wind turbine generator. Thereafter, determining a first standard deviation, over a pre-determined time period, of the wind directions values received from the first sensor and determining a second standard deviation, over a pre-determined time period, of the wind directions values received from the second sensor. Once the standard deviation is determined, determining a difference between the first and second mean wind directions and comparing the determined difference with a pre-determined threshold value wherein if the difference is greater than the pre-determined threshold value then comparing the first and second standard deviations. Finally, selecting a source of wind direction which has a lower standard deviation amongst the first and second standard deviations for subsequent yawing operations.

In an aspect, the present invention provides a system for controlling the yawing operation of a wind turbine generator (WTG) in a wind farm. The system comprises a controller within the WTG, where the controller receives wind direction values from a first sensor in the wind turbine generator. Thereafter, the controller determines a first mean wind direction, over a predetermined time, of the wind direction values received from the first sensor. Also, the controller receives wind direction values from a second sensor mounted away from the wind turbine generator and determines a second mean wind direction value, over a predetermined time period, of the wind direction values received from the second sensor. Further, the controller determines a first standard deviation, over a predetermined time, of the wind direction values received from the first sensor, and it also determines a second standard deviation, over a predetermined time period, of the wind direction values received from the second sensor. Thereafter, it determines a difference between the first and second mean wind directions and compares the determined difference with a predetermined threshold value, wherein if the determined difference is greater than the predetermined threshold value, it compares the first and second standard deviations and selects a source of wind direction that has a lower standard deviation amongst the first and second standard deviations for subsequent yawing operations.

### DETAILED DESCRIPTION OF DRAWINGS:

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of their scope. The invention will be described and explained with additional specificity and detail with the accompanying drawings in which:
- Fig. 1:: illustrates a wind turbine generator;
- Fig. 2:: illustrates a controller and its components in the present invention;
- Fig. 3:: illustrates a schematic view of one embodiment of a wind farm; and
- Fig. 4:: illustrates a process flow depicting a method of the present invention.

### DETAILED DESCRIPTION:

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof.

The terms "comprises", "comprising", "includes", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

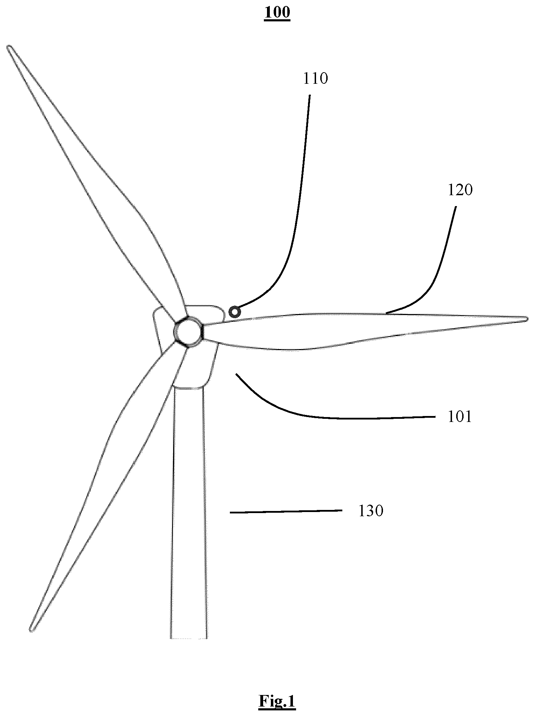

In an embodiment, FIG. 1 illustrates a front view of a wind turbine according to an embodiment of the present invention. As shown, the wind turbine includes a tower 130 extending from the ground, a nacelle 101 mounted on the tower 130, and a rotor coupled to the nacelle. The rotor includes a rotatable hub and three rotor blades 120 connected to the rotatable hub. Each rotor blade 120 may be spaced about the rotatable hub to facilitate rotating the rotor to enable kinetic energy to be transferred from the wind into mechanical energy, and subsequently, electrical energy. For instance, the rotatable hub may be rotatably coupled to an electric generator positioned within the nacelle to permit electrical energy to be produced. In general, the generator is coupled to the rotor of the wind turbine for generating electrical power from the rotational energy generated by the rotor. For example, the rotor may include a main shaft coupled to the hub for rotation. The generator may then be coupled to the main shaft such that rotation of the main shaft drives the generator.

As shown in FIG. 1, the WTG 100 may include a wind vane or an anemometer mounted at the suitable place on the wind turbine generator 100 to determine wind direction. In an embodiment, the wind vane or the anemometer 110 is mounted on the nacelle 101 which measures a wind direction.

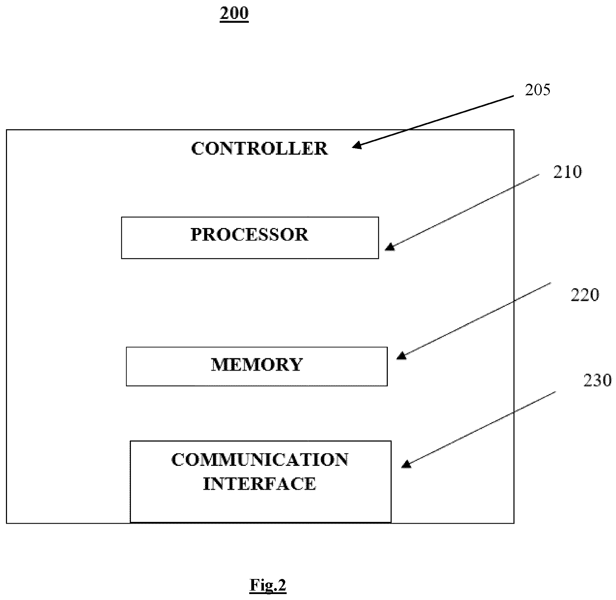

Referring to FIG. 2, the wind turbine 100 includes a turbine controller 200 within the nacelle 101. For example, the turbine controller 200 is disposed of within a portion of the nacelle. The turbine controller 200 is configured to control the various operating modes and/or components of the wind turbine 100.

In an embodiment, the turbine controller 200 is communicatively coupled to various components of the wind turbine 100 for controlling the wind turbine. For example, the turbine controller 200 may be communicatively coupled to the yaw drive mechanism of the wind turbine 100 for controlling and/or altering the yaw direction of the nacelle relative to the direction of the wind. Further, as the direction of the wind changes, the turbine controller 200 may be configured to control a yaw angle of the nacelle about a yaw axis to position the rotor blades 160 with respect to the direction of the wind, thereby controlling the loads acting on the wind turbine 160. For example, the turbine controller 200 may be configured to transmit control signals to a yaw drive mechanism of the wind turbine, via a yaw controller or direct transmission, such that the nacelle may be rotated about the yaw axis via a yaw bearing.

Similarly, the turbine controller 200 is also communicatively coupled to a pitch system having a plurality of pitch adjustment mechanisms for controlling and/or altering the pitch angle of the rotor blades 120. For instance, the turbine controller 200 transmit a control signal to each pitch adjustment mechanism such that one or more actuators of the pitch adjustment mechanism may be utilized to adjust the pitch angle of the rotor blades 120 by rotating the blades along their pitch axes.

As shown in FIG.2, the controller 200 may include processor 210 and memory 220 configured to perform a variety of functions (e.g., performing the methods, steps, calculations and storing relevant data from the sensors). Additionally, the controller 200 may also include a communications interface 230 to facilitate communications between the controller 200 and the various components of the wind turbine 100. Further, the communications interface 230 may include a sensor interface to permit signals transmitted from the anemometer110 and meta mast be converted into signals that can be understood and processed by the processors 210. It should be appreciated that the anemometer/wind vane110 and met mast or a LIDAR may be communicatively coupled to the communications interface 230 using any suitable means. For example, the anemometer/ 110 and met mast or a LIDAR are coupled to the communication interface 230 via a wired connection. However, in other embodiments, the anemometer/wind vane110 and met mast or a LIDAR may be coupled to the communication interface 230 via a wireless connection.

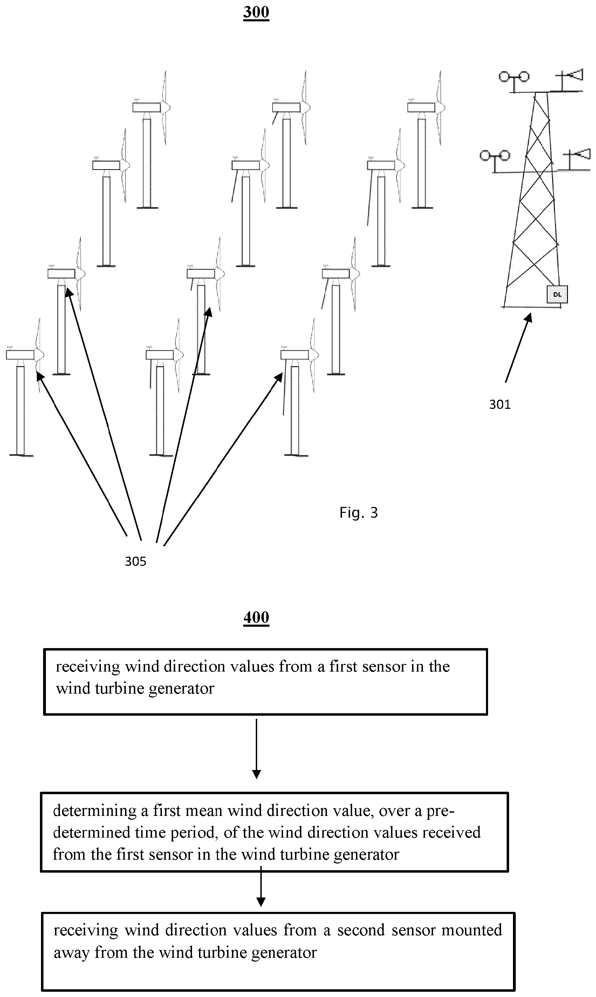

Referring to FIG. 3, a plurality of wind turbine generators 305 are commonly used in conjunction with one another to generate electricity and are commonly referred to as a "wind farm." As shown in the illustrated embodiment, the wind farm includes twelve wind turbines. However, in other embodiments, the wind farm may include any other number of wind turbines 305, such as less than twelve wind turbines 305 or greater than twelve wind turbines 305.

A separate meteorological mast or tower 301 ("met mast") having higher quality meteorological instruments that can provide more accurate measurements at one point in the windfarm is commonly provided. These tall, slender towers are equipped with an array of sensors designed to meticulously measure and record meteorological parameters such as wind speed, wind direction, temperature, and atmospheric pressure at various heights. The data collected is instrumental in assessing the viability of potential wind farm sites, optimizing wind turbine generator placement, and ensuring the efficient and safe operation of wind energy projects.

Met masts 301 are typically installed during the initial stages of wind farm development and in most cases remain installed and, in some cases, operational throughout the windfarm's lifecycle.

Alternatively, remote sensing technologies like LiDAR (Light Detection and Ranging) and SoDAR (Sonic Detection and Ranging) can be used instead of met mast.

In an embodiment, met mast 301 or LIDAR and SoDAR is mounted at a periphery of the wind farm.

In an embodiment, the invention provides a system 200 for controlling yawing operation of a wind turbine generator (WTG) in a wind farm.

The system 200 comprises a controller as described in Fig 2. The controller is configured to receive wind direction values from a first sensor 110 and a second sensor 301.

In an embodiment, the first sensor 110 is a wind vane or an anemometer or a similar sensor provided in the wind turbine generator as described above in the description of Fig 1 and the second sensor is a met mast 301 or a similar sensor provided in the wind farm as described above in the description of Fig 3.

Typically, the wind direction values from the first 110 and second sensors 301 are received at a 1-second time period.

According to an embodiment, the controller 205 is further configured to determine a first mean wind direction value over a pre-determined time, say 10 mins, of the wind direction values received from the first sensor 110.

Similarly, the controller 205 is also configured to determine a second mean wind direction value over a pre-determined time, say 10 mins, of the wind direction values received from the second sensor 301.

The mean wind direction is calculated using known statistical methods, such as arithmetic averaging or vector averaging, depending on the nature of the wind data. For instance, if the wind direction values recorded by the sensors at one-second intervals over a 10-minute period are w1, w2, w3........w600 (in degrees), the arithmetic mean can be computed as (w1+w2 +w3+.......w600) / 600 = Wm (in degrees).

According to an embodiment, the Controller 205 is further configured to determine a first standard deviation of the wind direction values received from the first sensor 110 over a pre-determined period of time, say 10 mins.

Similarly, the controller 205 is configured to determine a second standard deviation of the wind direction values received from the second sensor 301 over a pre-determined period of time, say 10 mins.

The standard deviation is calculated using known statistical methods, such as the circular standard deviation for directional data or the conventional standard deviation when applicable. However, since wind direction is a circular quantity, a circular standard deviation method may be used to account for directional wrapping and prevent skewed results.

The controller 205 is further configured to determine the difference between the determined first and second mean wind directions as described above.

The Controller 205 is further configured to compare this difference with a pre-determined threshold value of the mean wind direction stored within the controller 205.

For example, if the first mean of wind direction as determined from the wind direction values received from the first sensor is 85 degrees and the second mean wind direction as determined from the wind direction values received from the second sensor is 30 degrees and the pre-determined threshold value is set as 50 degrees, the controller 205 determines the difference (55 degrees here) is greater than the pre-determined threshold value of 50 degrees. Typically, the predetermined threshold value is indicative of a tolerable difference of the wind directions determined by the first and second sensors. It is to be understood that the pre-determined threshold value of 50 degrees is merely an example, and the threshold can be set to any suitable value based on system requirements, environmental conditions, or user-defined criteria.

Since the difference is greater than the pre-determined threshold value, it indicates that the wind direction is very haphazard and changing frequently which causes frequent yawing of the wind turbine generator. Thus, there is a need to select a source of determined wind direction which is varying less frequently between the sources of wind direction - i.e. the first and second sensors.

To do this, controller 205 is configured to compare the determined first and second standard deviations of the wind directions from the first and second sensors 110, 301 as described above.

Finally, the controller 205 is configured to select the wind direction source with lower standard deviation amongst the first and second sensors 110, 301. Typically, in determining the quantum and frequency of yawing, wind direction data is a critical input. The selected source of the wind direction with low standard deviation (first or second sensor) is fed to the yaw system's control system for subsequent yawing operation of the wind turbine generator.

During low wind season, it is expected that the difference between the two sources of wind direction - first sensor 110 (anemometer or wind vane in the wind turbine generator) and the second sensor 301 (met mast) will be high for two reasons: - inherent nature of the low wind speed and wake effects experienced by wind turbine generator from other wind turbine generators in the wind farm.

Also, during low wind season, the standard deviation of the wind direction from met mast 301 will be lower than the local wind vane 110 of the wind turbine generator (assuming flat terrain and the met mast is at the edge of the wind farm and not affected by wake effects of other WTGs).

Thus, for yawing, the wind direction from met mast 301 (second sensor) will be selected as wind direction source selected for determining the frequency and quantum of yawing. Selecting such a wind direction source which sends wind direction values which are less frequently varying will result in less frequent yawing as compared to the other source. Less frequent yawing results in less wear and tear of the components of the yawing system.

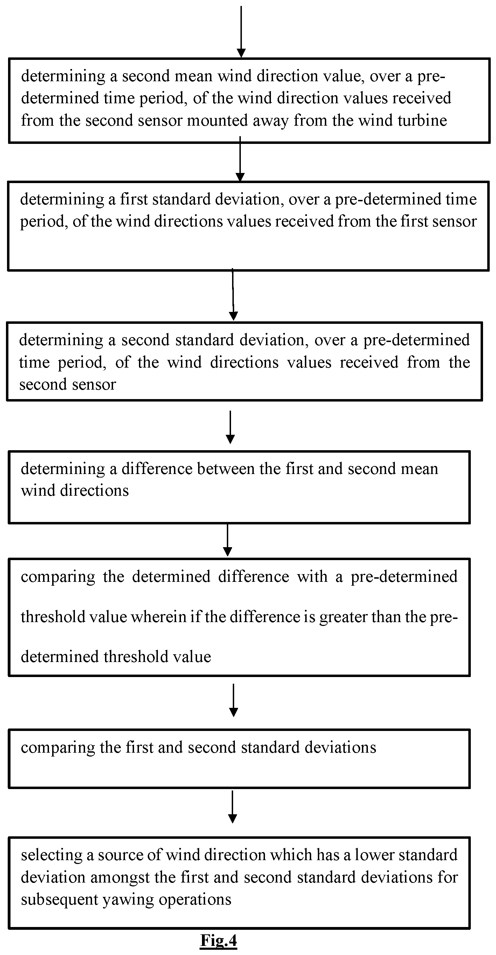

FIG. 4 illustrates a process flow 400 depicting a method of the present invention. The present invention provides a method for controlling yawing operation of a wind turbine generator (WTG) in a wind farm.

Typically, the wind direction values from the first and second sensors 110, 301 are received at a 1-second time period.

As a first step, a first mean wind direction over a pre-determined time period, say 10 mins, of the wind direction values from a first sensor 110 in the wind turbine generator is determined.

In an embodiment, the first sensor 110 is a wind vane or an anemometer or a similar sensor provided in the wind turbine generator as described above in the description of Fig 1.

Similarly, a second mean wind direction over a pre-determined time period, say 10 mins, of the wind direction values received from a second sensor 301 mounted away from the wind turbine generator is determined.

According to an embodiment, the second sensor 301 is a met mast or a similar such sensor provided in the wind farm as described above in the description of Fig 3.

The mean wind direction is calculated using known statistical methods, such as arithmetic averaging or vector averaging, depending on the nature of the wind data. For instance, if the wind direction values recorded by the sensors at one-second intervals over a 10-minute period are w1, w2, w3........w600 (in degrees), the arithmetic mean can be computed as (w1+w2 +w3+.......w600) / 600 = Wm (in degrees).

Thereafter, a first standard deviation of the wind direction values received from the first sensor 110 over a pre-determined period of time, say 10 mins is determined.

Similarly, a second standard deviation of the wind direction values received from the second sensors 301 over a pre-determined period of time, say 10 mins is determined.

The standard deviation is calculated using known statistical methods, such as the circular standard deviation for directional data or the conventional standard deviation when applicable. However, since wind direction is a circular quantity, a circular standard deviation method may be used to account for directional wrapping and prevent skewed results.

Thereafter, the difference between the determined first and second mean wind directions, as described above, is determined. This difference is then compared with a pre-determined threshold value of the mean wind direction stored within the controller 205.

For example, if the first mean of wind direction as determined from the wind direction values received from the first sensor 110 is 85 degrees and the second mean wind direction as determined from the wind direction values received from the second sensor 301 is 30 degrees and the pre-determined threshold value is set as 50 degrees, it is determined that the difference (55 degrees here) is greater than the pre-determined threshold value of 50 degrees. The predetermined threshold value is indicative of a tolerable difference of the wind directions determined by the first and second sensors 110, 301. It is to be understood that the pre-determined threshold value of 50 degrees is merely an example, and the threshold can be set to any suitable value based on system requirements, environmental conditions, or user-defined criteria.

Since the difference is greater than the pre-determined threshold value, it indicates that the wind direction is very haphazard and changing frequently which causes frequent yawing of the wind turbine generator Thus, there is a need to select a source of determined wind direction which is varying less frequently between the sources of wind direction - i.e. the first and second sensors 110, 301.

To do this, as a next step, the determined first and second standard deviations of the wind directions from the first and second sensors 110, 301, as described above, are compared.

Finally, the wind direction source with lower standard deviation amongst the first and second standard deviations is selected. Typically, in determining the quantum and frequency of yawing, wind direction data is a critical input. The selected source of the wind direction with low standard deviation (first or second sensor) is fed to the yaw system's control system 200 for subsequent yawing operation of the wind turbine generator.

During low wind season, it is expected that the difference between the two sources of wind direction - first sensor 110 (anemometer or wind vane in the wind turbine generator) and the second sensor 301 (met mast) will be high for two reasons: - inherent nature of the low wind speed and wake effects experienced by wind turbine generator from other wind turbine generators 100 in the wind farm.

Also, during low wind season, the standard deviation of the wind direction from met mast 301 will be lower than the local wind vane of the wind turbine generator (assuming flat terrain and the met mast is at the edge of the wind farm and not affected by wake effects of other WTGs).

Thus, for yawing, the wind direction from met mast 301 (second sensor) will be selected as wind direction source selected for determining the frequency and quantum of yawing. Selecting such a wind direction source which sends wind direction values which are less frequently varying will result in less frequent yawing as compared to the other source. Less frequent yawing results in less wear and tear of the components of the yawing system.

Many modifications and other embodiments of the invention set forth herein will readily occur to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

The foregoing description of embodiments of the invention has been presented for purposes of illustration and description. It is not intended to be exhaustive or to limit the invention to the precise form disclosed, and modifications and variations are possible in light of the above teachings or may be acquired from the practice of the invention. The embodiments were chosen and described in order to explain the principles of the invention and its practical application to enable one skilled in the art to utilize the invention in various embodiments and with various modifications as are suited to the particular use contemplated.

## Claims

1. A method for controlling yawing operation of a wind turbine generator (WTG) in a wind farm, the method comprising the steps of:
a) receiving wind direction values from a first sensor (110) in the wind turbine generator;
b) determining a first mean wind direction value, over a pre-determined time period, of the wind direction values received from the first sensor (110) in the wind turbine generator;
c) receiving wind direction values from a second sensor (301) mounted away from the wind turbine generator;
d) determining a second mean wind direction value, over a pre-determined time period, of the wind direction values received from the second sensor (301) mounted away from the wind turbine generator;
e) determining a first standard deviation, over a pre-determined time period, of the wind directions values received from the first sensor (110);
f) determining a second standard deviation, over a pre-determined time period, of the wind directions values received from the second sensor (301);
g) determining a difference between the first and second mean wind directions;
h) comparing the determined difference with a pre-determined threshold value wherein if the difference is greater than the pre-determined threshold value
i) comparing the first and second standard deviations; and
j) selecting a source of wind direction which has a lower standard deviation amongst the first and second standard deviations for subsequent yawing operations.

2. The method as claimed in claim 1, wherein the first sensor (110) is a wind vane or an anemometer or a similar sensor provided in the wind turbine generator.

3. The method as claimed in claim 1, wherein the second sensor is a met mast or a LIDAR (301) mounted away from the wind turbine generator at a periphery of the wind farm.

4. The method as claimed in claim 1, wherein the predetermined threshold value is indicative of a tolerable difference of the wind directions determined by the first and second sensors (110, 301).

5. A system for controlling yawing operation of a wind turbine generator (WTG) in a wind farm, the system comprising a Controller (205) within the WTG, the controller (205) configured to:
a) receive wind direction values from a first sensor (110) in the wind turbine generator;
b) determine a first mean wind direction, over a pre-determined time period, of the wind direction values received from the first sensor (110);
c) receive wind direction values from a second sensor (301) mounted away from the wind turbine generator;
d) determine a second mean wind direction value, over a pre-determined time period, of the wind direction values received from the second sensor (301);
e) determine a first standard deviation, over a pre-determined time period, of the wind directions values received from the first sensor (110);
f) determine a second standard deviation, over a pre-determined time period, of the wind directions values received from the second sensor (301);
g) determine a difference between the first and second mean wind directions;
h) compare the determined difference with a pre-determined threshold value; wherein if the determined difference is greater than the pre-determined threshold value;
i) compare the first and second standard deviations; and
j) select a source of wind direction which has a lower standard deviation amongst the first and second standard deviations for subsequent yawing operations.

6. The system as claimed in claim 5, wherein the first sensor (110) is a wind vane or an anemometer or a similar sensor provided in the wind turbine generator.

7. The system as claimed in claim 5, wherein the second sensor is a met mast or a LIDAR (301) mounted away from the wind turbine generator at a periphery of the wind farm.

8. The system as claimed in claim 5, wherein the predetermined threshold value is indicative of a tolerable difference of the wind directions determined by the first and second sensors (110, 301).
